(19) Europäisches Patentamt
European Patent Office
Office européen des brevets

(11) **EP 3 470 775 B1**

(12) **EUROPÄISCHE PATENTSCHRIFT**

(45) Veröffentlichungstag und Bekanntmachung des Hinweises auf die Patenterteilung:
**14.12.2022  Patentblatt 2022/50**

(21) Anmeldenummer: **17195986.9**

(22) Anmeldetag: **11.10.2017**

(51) Internationale Patentklassifikation (IPC):
**G01B 17/02** *(2006.01)*     **G01N 29/07** *(2006.01)*

(52) Gemeinsame Patentklassifikation (CPC):
**G01B 17/02; G01N 29/07;** G01N 2291/011;
G01N 2291/02854; G01N 2291/044;
G01N 2291/056; G01N 2291/105; Y02E 30/30

(54) **VERFAHREN UND MESSANORDNUNG ZUR MESSUNG VON SCHICHTDICKE UND SCHALLWELLENGESCHWINDIGKEIT IN EIN- ODER MEHRLAGIGEN PROBEN MITTELS ULTRASCHALL OHNE A-PRIORI KENNTNIS DER JEWEILS ANDEREN GRÖSSE**

METHOD AND MEASURING ASSEMBLY FOR MEASURING LAYER THICKNESS AND SOUND WAVE SPEED IN SINGLE-LAYERED OR MULTILAYERED SAMPLES BY MEANS OF ULTRASOUND WITHOUT A PRIORI KNOWLEDGE OF THE OTHER VARIABLE

PROCÉDÉ ET DISPOSITIF DE MESURE PERMETTANT DE MESURER L'ÉPAISSEUR DE COUCHE ET LA VITESSE D'ONDES SONORES DANS DES ÉCHANTILLONS MONOCOUCHE OU MULTICOUCHE AU MOYEN DES ULTRASONS SANS CONNAISSANCE A PRIORI DE L'AUTRE GRANDEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.04.2019  Patentblatt 2019/16**

(73) Patentinhaber: **Flexim Flexible Industriemesstechnik GmbH
12681 Berlin (DE)**

(72) Erfinder: **Ebert, Sven
22081 Hamburg (DE)**

(74) Vertreter: **Grünbaum, Annekathrin et al
Schnick & Garrels Patentanwälte PartG mbB
Schonenfahrerstraße 7
18057 Rostock (DE)**

(56) Entgegenhaltungen:
DE-A1- 3 441 894     DE-A1-102010 037 981
US-A1- 2004 250 624     US-A1- 2014 020 478

## Beschreibung

Diese Erfindung befasst sich mit dem Messen der Wandstärke von Rohren, Behältern oder Platten (im Folgenden als Probe bezeichnet) bei denen die Innen- bzw. Unterseite nicht zugänglich ist. Außerdem befasst sich die Erfindung mit der Messung der Schichtdicke von Beschichtungen oder Auskleidungen dieser Proben. Es werden spezielle Messanordnungen mittels Ultraschallsender- und Empfänger in Pitch-Catch und Puls-Echo-Konfiguration offengelegt sowie das zugehörige Verfahren zur Bestimmung der Wandstärke ohne vorherige Kenntnis der Schallgeschwindigkeit in der Probe.

Die Notwendigkeit der Messung von Wandstärken ohne Zugang zur Innenseite ergibt sich beispielsweise in der Clamp-On-Ultraschalldurchflussmessung, bei welcher der Durchflusssensor auf ein bestehendes Rohr unbekannter Wandstärke geschnallt wird. Aber auch in der zerstörungsfreien Prüfung, z.B. zur Bestimmung der Druckfestigkeit von Behältern, ist die Messung von Wandstärken ohne Zugang zum Innenraum notwendig.

Die Genauigkeit von Clamp-On-Ultraschalldurchflussmessungen wird wesentlich durch die Unbestimmtheit des Rohrinnendurchmessers beeinflusst. Der Außendurchmesser eines Rohres kann einfach und genau mit einem Maßband gemessen werden. Um aus dem Außendurchmesser den Innendurchmesser zu errechnen, muss die Wandstärke des Rohres bekannt sein. Ein Fehler in der Wandstärkenbestimmung setzt sich letztendlich im Messfehler des Volumenstromes fort. Daher muss die Wandstärkenbestimmung so präzise wie möglich erfolgen. Aufgrund der Eingriffsfreiheit einer Clamp-on Durchflussmessung kann nur in seltenen Fällen die Wandstärke oder der Innendurchmesser mechanisch mit einer Mikrometerschraube oder Messschieber vermessen werden.

Dem Stand der Technik entspricht die Messung der Wandstärke mit einem Ultraschallwanddickenmesser (WDM) im Puls-Echo-Verfahren wahlweise mit einem Schallwandlerelement (Sender und Empfänger sind identisches Element) oder mit zwei Schallwandlerelementen (Pitch-Catch Konfiguration). Bei diesem Verfahren wird ein Ultraschallpuls senkrecht zur Probenoberfläche in die Probe gesendet. Der Puls wird mehrfach in der Probe (Rohr- oder Behälterwandung, Platte) reflektiert. Jedes Echo wird vom Empfänger des Ultraschallwanddickenmessers aufgenommen. Aus dem Pulsabstand innerhalb der Echofolgen und mittels Kenntnis der Schallgeschwindigkeit der Probe kann dann die Wandstärke bestimmt werden. Um ein ausreichend genaues Ergebnis zu erhalten, muss die Schallgeschwindigkeit a-priori bekannt sein. Im Regelfall wird nur anhand grober Schätzung des Materials und anhand tabellierter Werte die Schallgeschwindigkeit geschätzt. Im Fall von Stahlproben kann aufgrund der Streuung der Schallgeschwindigkeiten verschiedener Stahlsorten die Schätzung 2% neben dem wahren Wert liegen. Temperaturbedingte Abweichungen der Rohrwandschallgeschwindigkeit werden gar nicht berücksichtigt (100 °C Temperaturunterschied führen zu etwa 1 % Schallgeschwindigkeitsfehler). Bei von Stahl abweichenden Materialien wie Gusseisen oder Kunststoffen kann der Schätzfehler weitaus höher liegen. Fehlerhafte Abschätzungen der Schallgeschwindigkeiten setzen sich direkt als Messfehler der Wandstärke fort. Betrachtet man diese Messunsicherheit in der Clamp-On Durchflussmessung, so führt bei großen Rohren (z.B. DN1000, 25 mm Wandstärke) eine Fehlschätzung von 2% der Rohrwandstärke zu einem Durchflussmessfehler von 0,2%. Bei kleinen und dickwandigen Rohren (z.B. 4" SCH 120) wächst der Fehler der Durchflussmessung auf 1%.

Aus dem Patent US 6883376 B2 ist ein Verfahren bekannt, um eine unbekannte Rohrwandstärke ohne Kenntnis seiner Schallgeschwindigkeit zu messen. Das Verfahren bedient sich abweichend zur hier dargestellten Erfindung einer Immersions- und Transmissionsmethode. Das Verfahren bedingt, dass das zu vermessendes Rohr mit Wasser gefüllt und in ein Wasserbad getaucht werden muss. Zur Vermessung bestehender Gefäße oder Rohre in einer Anlage ohne Ausbau derselben ist diese Methode nicht geeignet.

Verwendet man einen konventionellen Wanddickenmesser (WDM) auf einem beschichteten oder ausgekleideten Rohr oder für ein Mehrschichtsystem, so überlagern sich im allgemeinen Echofolgen aus jeder einzelnen Schicht, so dass diese nicht mehr ohne weiteres zur Wandstärkenbestimmung auswertbar sind. Im Falle spezieller Schichtdicken- und Schallgeschwindigkeitsverhältnisse der einzelnen Schichten können die Echofolgen zwar ausgewertet werden (z.B. dünne Kunststoffbeschichtung auf einer dicken Stahlrohrwand), aber ohne vorherige Kenntnis der Schallgeschwindigkeiten der einzelnen Schichten können nach dem Stand der Technik die einzelnen Schichtdicken nicht bestimmt werden.

Zur Vermessung verborgener Schichten oder aber von Mehrschichtsystemen stellen die Patente US 2006191342 A1 und US 4398421 A verschiedene Messanordnungen aus Ultraschallwandlern dar. Die dargestellten Messanordnungen sind so ausgelegt, dass die Probe gleichzeitig mit Longitudinal- und Oberflächenwellen geprüft wird. In beiden zitierten Fällen müssen die Schallgeschwindigkeiten der verwendeten Wellenarten zur Bestimmung der Schichtdicken bekannt sein. US 6070466 A bezieht sich auf die Messung eines Mehrschichtsystems das ausschließlich aus verschiedenen Metallen besteht. Die getrennten, schrägen Schallwandler erzeugen Transversalwellen und eine optionale Messanordnung erzeugt Longitudinalwellen. Um die Schichtdicken mit diesem Verfahren zu bestimmen müssen die Schallgeschwindigkeiten in den einzelnen Schichten bekannt sein. Gleiches gilt für die Bestimmung einer durch eine Beschichtung verborgenen Schicht nach Patent US 5349860 A und das in US 6035717 A beschriebene Verfahren zur Rohrwand- und Beschichtungsdickenmessung.

DE 102010037981 A1 beschreibt ein Ultraschallmessverfahren zur Aushärtungsüberwachung und Laminatdickenbestimmung bei der Faserverbundteilfertigung. Ein Utraschallsignal wird durch einen an einer Einkoppelfläche eines Messobjekts anliegenden Vorlaufkörper unter einem Winkel α zur Oberflächennormalen der Einkoppelfläche in das Messobjekt eingekoppelt. Es werden eine Laufzeit des Ultraschallsignals durch das Messobjekt zwischen der Einkoppelfläche und der Auskoppelfläche und ein Einfallwinkel des Ultraschallsignals auf die Auskoppelfläche und/oder ein seitlicher Versatz in Richtung der Einkoppelfläche zwischen einem Einkoppelort des Ultraschallsignals an der Einkoppelfläche und einem Einfallort des Ultraschallsignals auf die Auskoppelfläche gemessen, um aus der Laufzeit, dem Winkel a, dem Einfallwinkel und/oder dem Versatz und der Schallgeschwindigkeit in dem Vorlaufkörper, die Schallgeschwindigkeit in dem Messobjekt und die Dicke d des Messobjekts zu bestimmen.

DE 3441894 A1 offenbart ein Verfahren zur Bestimmung der Wandstärke und / oder der Schallgeschwindigkeit von Probekörpern mit Ultraschallimpulsen. Mit Hilfe eines Senkrechtprüfkopfes wird die Laufzeit tw der entsprechenden Ultraschallimpulse zwischen der Schalleingangsfläche des Prüflings und der der Schalleingangsfläche gegenüberliegenden Rückwand des Prüflings bestimmt. Ein jeweils zusätzlicher Sende- und Empfangswandler ist symmetrisch zum ersten Wandler angeordnet und ermittelt die Laufzeit ts, die die Ultraschallimpulse vom Sendewandler über den Reflexionsbereich der Rückwand des Prüflings zum Empfangswandler benötigen. Aus den Laufzeitwerten tw und ts und dem Abstand a zwischen dem zusätzlichen Sendewandler und dem zusätzlichen Empfangswandler wird dann die Wandstärke und / oder die Schallgeschwindigkeit des Prüflings berechnet.

US 2004/250624 A1 offenbart einen Ultraschallwandler zum Messen der Dicke eines Teils mit einer Beschichtung mit mindestens einem Schallwandler und einer Pufferverzögerungsleitung mit einer Impedanz, die an eine Impedanz der Beschichtung angepasst ist.

In US 2014/020478 A1 wird ein Keil und ein Verfahren zum Bestimmen der Schallgeschwindigkeit im Keil offenbart. Der Keil beinhaltet eine reflektierende Wand und ist so konfiguriert, dass ein Teil des von einem Ultraschallwandler übertragenen Hauptultraschallsignals reflektiert wird und durch den Keil zurück zum Ultraschallwandler wandert. Die Schallgeschwindigkeit kann basierend auf der zurückgelegten Wegstrecke und der Laufzeit des Hauptultraschallsignals und des reflektierten Ultraschallsignals im Keil bestimmt werden.

## Darstellung der Erfindung

Die Aufgabe der Erfindung ist es, die Wandstärke einer Probe (z.B. Rohrwand, Behälterwand oder Platte) unabhängig von der Kenntnis der Schallgeschwindigkeit dieser Probe zu messen. Eine weitere Aufgabe besteht in der Messung der Dicke einzelner Schichten eines Mehrschichtsystems (z.B. Rohrwand mit Beschichtung oder Auskleidung) ohne vorherige Kenntnis ihrer Schallgeschwindigkeiten.

Nachfolgend werden ein Verfahren und eine Messanordnung beschrieben, die es ermöglichen, die Wandstärke unabhängig von der Kenntnis der Schallgeschwindigkeit der Probe (z.B. Rohrwand, Behälterwand oder Platte) zu messen. Dies führt zu einer verringerten Messunsicherheit der Wandstärke und Innendurchmesser des Rohres und somit zu einer verringerten Messunsicherheit eines Clamp-On-Ultraschalldurchflussmessgerätes. Durch das Verfahren können einzelne Schichtdicken eines Mehrschichtsystems (z.B. Rohrwand mit Beschichtung oder Auskleidung) ohne vorherige Kenntnis ihrer Schallgeschwindigkeiten gemessen werden.

Erfindungsgemäß erfolgt die Messung von Schichtdicke und Schallgeschwindigkeit wenigstens einer Schicht in einer ein- oder mehrlagigen Probe mittels Ultraschall durch Messung von Laufzeiten von Ultraschallsignalen auf wenigstens zwei verschiedenen Schallwegen durch die Probe. Die Schallwege laufen dazu unter verschiedenen Winkeln mit der gleichen Schallgeschwindigkeit in derselben Schicht der Probe.

Die Schallwege werden erzeugt, indem auf der Oberfläche der ein- oder mehrlagigen Probe wenigstens ein Koppelkörper mit wenigstens zwei Schallwandlern angeordnet. Die Schallwandler senden die Ultraschallsignale unter verschiedenen Winkeln zur Probenoberfläche auf den zwei verschiedenen Schallwegen durch den Koppelkörper in die Probe und empfangen die reflektierten Ultraschallsignale wieder. Die empfangenden Ultraschallsignale bestehen aus einer Überlagerung mehrerer Signalanteile, die eine unterschiedliche Anzahl der Schallwege in der Probe gelaufen sind. Die Überlagerung der einzelnen Signalanteile stellen eine Echofolge dar. Jeder Schallweg wird mindestens einmal von einem Signal mit einer gleich großen Schallgeschwindigkeit in der Schicht durchlaufen. Mit Hilfe von Der Formeln (1.1) und (1.2) erfolgt eine Berechnung der Schichtdicke und der Schallgeschwindigkeit.

Durch Messanordnungen mit verschiedenen Einstrahlwinkeln werden verschiedene Laufzeiten in der Probe durch Ausmessen der Pulsabstände innerhalb einer Echofolge bestimmt. Die erste Laufzeit berechnet sich als Position eines ersten Nebenmaximums einer Autokorrelationsfunktion einer Echofolge, wobei die Echofolge aus Ultraschallsignalen besteht, welche vom Schallwandler unter einem ersten Winkel zum Lot der Probenoberfläche wenigstens n-mal und n+1-mal durch die Probe und zurück zum Schallwandler mittels n Rückwandreflektionen durch die zu vermessende Schicht der Probe und zurück zum Schallwandler mittels n Rückwandreflektion durch die Probe gelaufen sind. Die zweite Laufzeit berechnet sich gleichermaßen, aber als Position eines ersten Nebenmaximums einer Autokorrelationsfunktion einer Echofolge bestehend aus Ultraschallsignalen, welche vom Schallwandler unter einem zweiten Winkel zum Lot der Probenoberfläche wenigstens n-mal und n+1-mal durch die zu vermessende Schicht der Probe und zurück zum Schallwandler mittels n Rückwandreflektionen durch die Probe gelaufen sind.

Für eine weitere Ausführungsform des Verfahrens werden durch Zu- und Abschalten einzelner Piezoelemente einer aktiven Schallwandlerfläche der Schallwandler, welcher mehrere Piezoelemente enthält, gesendete Ultraschallsignale mindestens zweimal die Probe auf beiden Schallwegen durchlaufen und durch die Schallwandler wieder empfangen.

Für eine wenigstens zweilagige Probe werden durch Zu- und Abschalten einzelner Piezoelemente einer aktiven Schallwandlerfläche der Schallwandler für jede einzelne Schicht die Schichtdicke und die Schallgeschwindigkeit bestimmt. Besonders vorteilhaft ist es, wenn die obere Schicht der Probe eine kleinere akustische Impedanz als die untere Schicht aufweist.

Für die Durchführung des erfindungsgemäßen Verfahrens wird eine Messanordnung zur Messung von Dicke und Schallgeschwindigkeit einer ein- oder mehrlagigen Probe mittels Ultraschall offenbart. Auf der Oberfläche der Probe wird ein Koppelkörper mit wenigstens zwei Schallwandlern angeordnet. Die Schallwandler sind unter einem definierten Winkel auf dem Koppelkörper angeordnet, so dass der Ultraschall unter einem Einstrahlwinkel durch den Koppelkörper in die Probe gelangt und wenigstens zwei Schallwege in einer Schicht der Probe durchläuft und von dort zurück zu den wenigstens zwei Schallwandlern reflektiert wird.

Der Koppelkörper ist in seiner Grundform ein Quader und seine obere Deckfläche weist abgeschrägte longitudinale Seitenkanten auf.

Für eine weitere Ausführungsform sind auf der Probe oder auf einzelnen Schichten der Probe Reflektoren angeordnet, so dass gesendete Ultraschallsignale mindestens zweimal auf den Schallwege die Probe durchlaufen und durch die Schallwandler wieder empfangen werden.

Für eine weitere Ausführungsform sind wenigstens zwei Schallwandler unter einem definierten Winkel auf dem Koppelkörper und ein Schallwandler senkrecht zur Probenoberfläche angeordnet.

Für eine weitere Ausführungsform sind wenigstens zwei Schallwandler in Form von Clamp-On-Durchflusssensoren und ein Schallwandler in Form eines Ultraschallwanddickenmessers angeordnet.

Für eine weitere Ausführungsform sind zwei Sender-Empfänger-Paare aus jeweils zwei Schallwandlern mit unterschiedlichen Winkeln auf dem Koppelkörper angeordnet, so dass ein erstes Sender-Empfänger-Paar einen Winkel zur Probenoberfläche aufweist, welcher zu dem Winkel des zweiten Sender-Empfänger-Paars verschieden ist.

Die Schallwandler bestehen für eine Ausführungsform aus Schallwandler-Arrays mit einem oder mehreren Piezoelementen. Eine aktive Schallwandlerfläche der Schallwandler kann durch Zu- und Abschalten einzelner Piezoelemente definiert werden.

Das in dieser Erfindung offengelegte Verfahren führt im Fall von unbekannten oder nur mit Unsicherheiten bekannten Schallgeschwindigkeiten einer Probe zu einer genaueren Wandstärkenmessung als es nach dem Stand der Technik möglich ist.

Diesbezüglich stellt die vorliegende Erfindung mehrere Messanordnungen dar, so dass die Überlagerung der Echofolgen für bestimmte Mehrschichtsysteme umgangen werden kann und somit die einzelnen Schichtdicken ohne vorherige Kenntnis der einzelnen Schallgeschwindigkeiten der Schichten gemessen werden können.

**Ausführung der Erfindung**

Die Erfindung wird anhand von Ausführungsbeispielen erläutert. Hierzu zeigt

Figur 1     ein erstes Ausführungsbeispiel der Messanordnung zur Bestimmung der Schallgeschwindigkeit und Wandstärke einer Probe,

Figur 2     ein zweites Ausführungsbeispiel der Messanordnung zur Bestimmung der Schallgeschwindigkeit und Wandstärke einer Probe,

Figur 3     ein drittes Ausführungsbeispiel der Messanordnung zur Bestimmung der Schallgeschwindigkeit und Wandstärke einer Probe und

Figur 4     ein viertes Ausführungsbeispiel der Messanordnung zur Bestimmung der Schallgeschwindigkeit und Wandstärke einer Probe,

Figur 5     ein Ausführungsbeispiel einer Messanordnung zur Schichtdickenbestimmung eines Mehrschichtsystems,

Figur 6a     Echofolgen einer Schrägmessung unter einem Winkel zum Lot der Probenoberfläche und

Figur 6b     Echofolgen einer Senkrechtmessung an einer Stahlplatte,

Figur 7a     eine Autokorrelationsfunktion der Echofolgen aus Figur 6a und

Figur 7b     eine Autokorrelationsfunktion der Echofolgen aus Figur 6b.

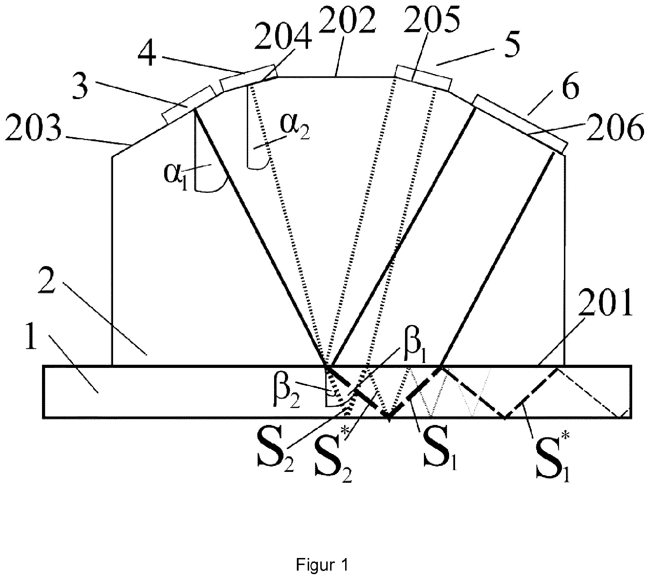

Die Figuren 1, 2, 3 und 4 zeigen mögliche Ausführungsbeispiele einer Messanordnung zur Bestimmung der Schallgeschwindigkeit und Schichtdicke einer Probe 1. Ein Koppelkörper 2 in der Grundform eines Quaders mit abgeschrägten longitudinalen Seitenkanten 203, 204, 205, 206 einer oberen Deckfläche 202 liegt auf der Oberfläche der Probe 1 auf. Die Koppelfläche 201 des Koppelkörpers 2 wird mit einem geeigneten (z.B. flüssig) Koppelmittel akustisch mit der Probe 1 gekoppelt. In den Figuren werden für gleiche Anordnungen gleiche Bezugszeichen verwendet.

Auf dem Koppelkörper 2 werden die Schallwandler angeordnet. Grundsätzlich können alle Schallwandler als Schallwandler-Arrays ausgeführt sein, d.h. sie können aus einem oder mehreren Piezoelementen bestehen, so dass die aktive Schallwandlerfläche durch zu- und abschalten der Piezoelemente geändert werden kann. Die Schallwandler sind unter verschiedenen Winkeln zur Probenoberfläche orientiert, so dass gesendete Ultraschallsignale mindestens zweimal die Probe 1 auf Schallwegen $S_1$ und $S_2$ durchlaufen und durch die Schallwandler wieder empfangen werden.

In Figur 1 wird gezeigt, dass Ultraschall von einem Schallwandler 3 unter einem Einstrahlwinkel $\alpha_1$ zu Schallwandler 6 durch den Koppelkörper 2 und von einem Schallwandler 4 unter einem Einstrahlwinkel $\alpha_2$ zu Schallwandler 5 geleitet wird, so dass die Ultraschallwellen auf dem Weg vom Sender zum Empfänger die Probe 1 auf den Schallwegen $S_1$ bzw. $S_2$ mindestens einmal durchlaufen. In Figur 1 ist der Schallwandler 3 auf der ersten longitudinalen Seitenkante 203 als Sender angeordnet und mit dem Schallwandler 6, welcher auf einer, der ersten longitudinalen Seitenkante 203 gegenüberliegenden, zweiten longitudinalen Seitenkante 206 angeordnet ist, als Empfänger verbunden, wobei die Ultraschallwellen auf dem Schallweg $S_1$ verlaufen. Der Schallwandler 4 ist der ersten longitudinalen Seitenkante 204 als Sender zu Schallwandler 5, welcher auf einer, der ersten longitudinalen Seitenkante 204 gegenüberliegenden, zweiten longitudinalen Seitenkante 205 angeordnet ist, als Empfänger über den Schallweg $S_2$ verbunden.

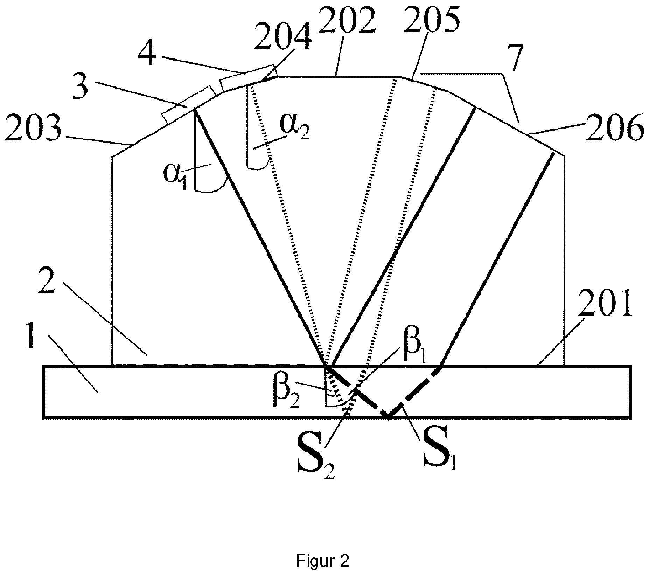

In Figur 2 sind nur zwei Schallwandler 3 und 4 auf den jeweiligen ersten longitudinalen Seitenkanten 203, 204 des Koppelkörpers 2 angeordnet. Die von diesen Schallwandlern 3 und 4 unter dem Einstrahlwinkel $\alpha_1$ und $\alpha_2$ gesendeten Ultraschallsignale werden von den gleichen Schallwandlern 3 und 4 wieder empfangen, da sie durch Reflektoren 7, welche auf den zweiten longitudinalen Seitenkanten 205, 206 des Koppelkörpers 2 angeordnet sind, wieder zurückgeworfen werden.

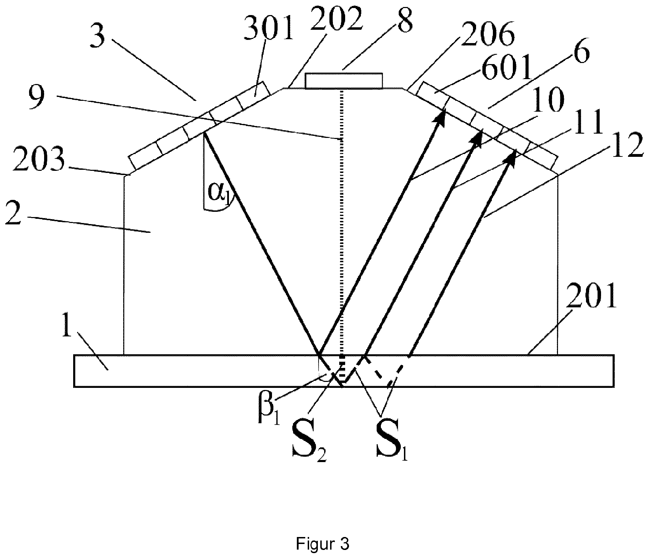

Figur 3 zeigt die Schallwege, die zur Bestimmung der Schichtdicke der Probe 1 ohne Kenntnis einer Schallgeschwindigkeit der gesendeten Ultraschallsignale notwendig sind. Der Koppelkörper 2 hat in diesem Ausführungsbeispiel zwei longitudinale Seitenkanten 203, 206, auf welchen die Schallwandler 3 und 6 angeordnet sind. Die Piezoelemente 301 von Schallwandler 3 und die Piezoelemente 601 von Schallwandler 6 sind aktiv. Von Schallwandler 3 wird ein Ultraschallpuls gesendet, welcher gemäß Schallweg 10 mit einem Einstrahlwinkel a durch den Koppelkörper 2 an der Probe 1 reflektiert und zum Empfänger 6 gelangt. Ein Teil des Ultraschallpulses wird in die Probe 1 transmittiert, dort unter einem Winkel $\beta$ an der Innenseite reflektiert und zum Empfänger 6 geleitet (Schallweg 11). Durch weitere Reflektionen innerhalb der Probe 1 gelangen weitere, verzögerte Ultraschallpulse zum Empfänger 6 (exemplarisch durch Schallweg 12 gezeigt). Neben dieser "Schräganordnung" aus Schallwandler 3 und 6 ist auf der oberen, parallel zur Koppelfläche 201 verlaufenden Deckfläche 202 des Koppelkörpers 2 ein Schallwandler 8 in einer "Senkrechtanordnung" angeordnet. Der zugehörige Schallweg 9 verläuft senkrecht zur Probe 1 und ist als gestrichelte Linie dargestellt. Von Schallwandler 8 wird ein Ultraschallpuls durch den Koppelkörper 2 in die Probe 1 transmittiert. In der Probe 1 wird der Ultraschallpuls mehrfachreflektiert und eine Echofolge gelangt zurück zum Schallwandler 8, welche diese Echofolge als Empfänger aufnimmt.

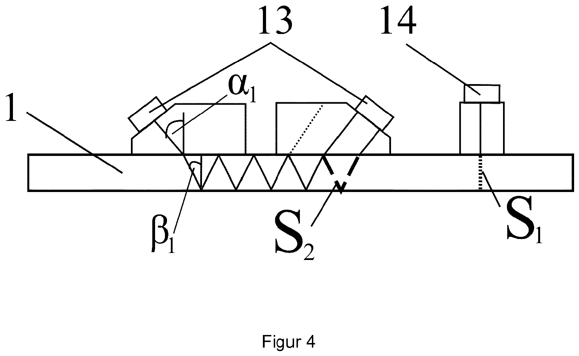

Figur 4 zeigt eine Messanordnung mit konventionellen Clamp-On-Durchflusssensoren als Schallwandler 13 mittels zweier Koppelkörper 2 und einem zusätzlich angeordneten konventionellen Ultraschallwanddickenmesser als Schallwandler 14 zur Bestimmung der Wandstärke der Probe 1 ohne vorherige Kenntnis der Schallgeschwindigkeit in der Probe 1. Hierbei bilden die Schallwandler 13 mit einem oder mehreren Piezoelementen 131 die in Figur 3 dargestellte "Schräganordnung" und der separate Schallwandler 14 mit einem oder mehreren Piezoelementen 141 die "Senkrechtanordnung". Die Clamp-On-Durchflusssensoren (Schallwandler 13) müssen in der Probe die gleiche Wellenart anregen, wie der Ultraschallwanddickenmesser (Schallwandler 14). Typische Clamp-On-Durchflusssensoren (Schallwandler 13) erzeugen Transversalwellen in einer Stahlprobe, somit muss ein Transversalwellen-Ultraschallwanddickenmesser verwendet werden. Wird die Anordnung aus Figur 4 hingegen auf einer Kunststoffprobe verwendet, so erzeugen die Clampon-Durchflusssensoren Longitudinalwellen in der Probe 1 und es muss ein Longitudinalwellen-Ultraschallwanddickenmesser verwendet werden.

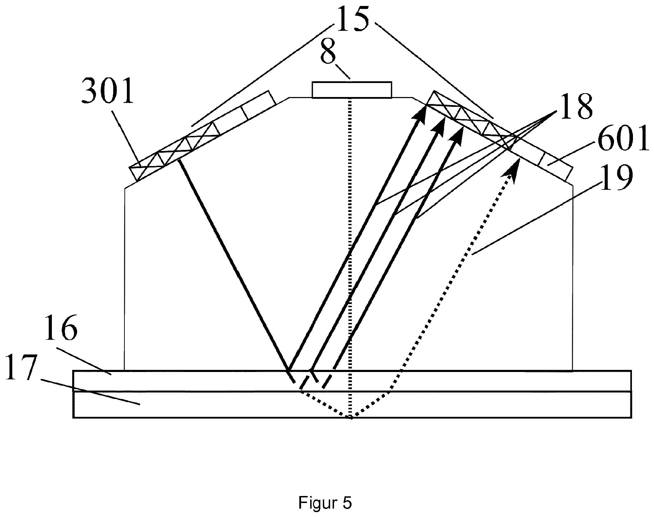

Figur 5 zeigt die Messanordnung zur Schichtdickenbestimmung eines Mehrschichtsystems. Die dargestellte Probe 1 besteht aus zwei Schichten 16 und 17 unterschiedlicher Materialien. Der Schallwandler 3 mit seinen Piezoelementen 301 und der Schallwandler 6 mit seinen Piezoelementen 601 sind wie in Figur 3 angeordnet. Im Unterschied zu Figur 3 sind einzelne Piezoelemente 301, 601 abgeschaltet, welche in der Figur 5 ohne Kreuze versehen sind. Die Schallwandler 3 und 6 werden so betrieben, dass die mit Kreuzen markierten Piezoelemente 301, 601 aktiv sind. Dies führt zu einer Verkleinerung der Schallwandlerfläche der Schallwandler 3 und 6 sowie zu einer Verschiebung des Schallweges 18 nach links. Es ist ersichtlich, dass der unvermeidlich angeregte Schallweg 19, welcher durch die untere Schicht 17 führt auf die abgeschalteten Piezoelemente 601 des Empfängers 6 trifft. Mittels dem exemplarisch dargestellte Verfahren des Zu- und Abschaltens einzelner Piezoelemente 301, 601 kann die Überlagerung von Echofolgen in der "Schräganordnung" bei Mehrschichtproben umgangen werden.

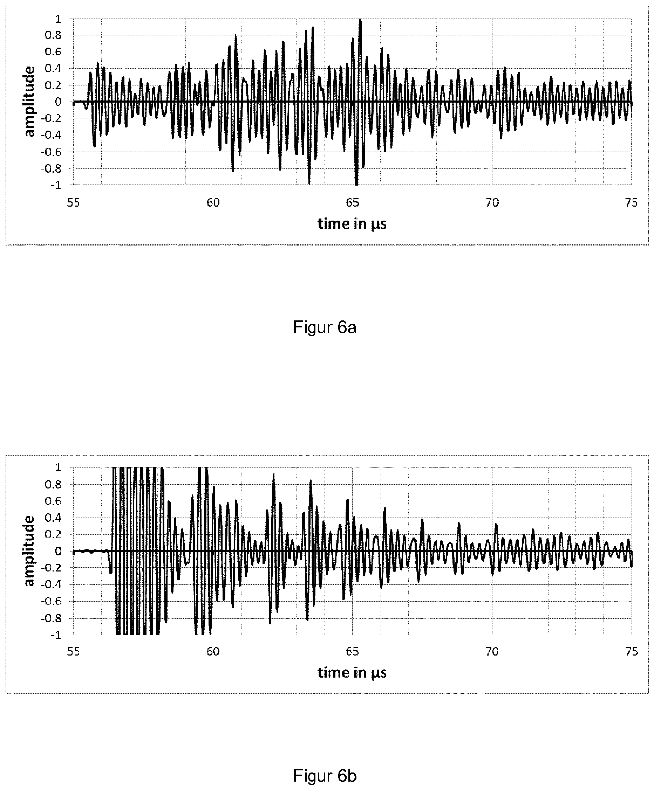

Figur 6a zeigt beispielhaft die Echofolgen der Schrägmessung unter einem Einstrahlwinkel a von 15° zum Lot der Probenoberfläche und Figur 6b zeigt die Echofolgen einer Senkrechtmessung an einer 4 mm Stahlplatte. Die gezeigten Echofolgen wurden mit einer Messanordnung gemäß Figur 3 mit einem aus Kunststoff ausgeführten Koppelkörper 2 aufgenommen.

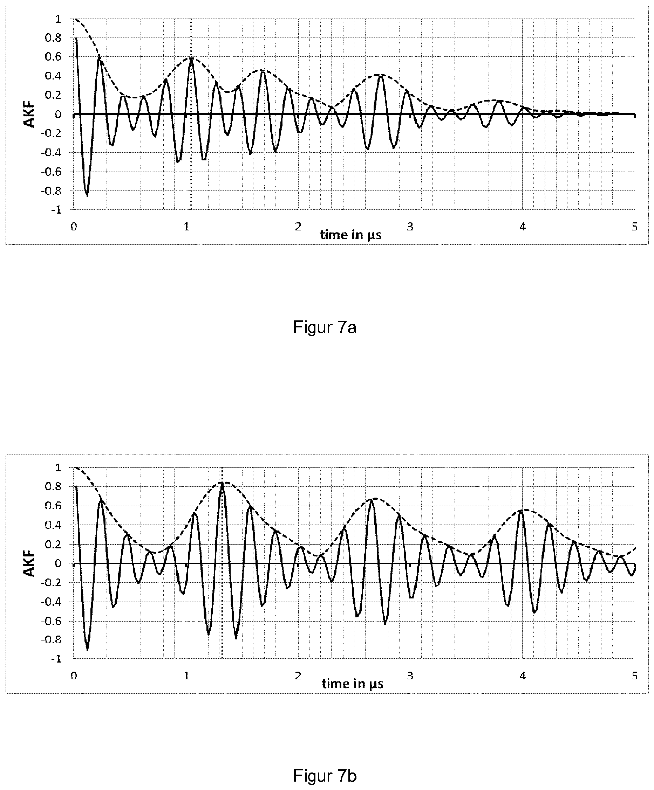

Figur 7a und Figur 7b zeigen die Autokorrelationsfunktionen der beispielhaften Echofolgen aus Figur 6a und Figur 6b, welche zuvor gefenstert wurden. Die mit einer senkrechten Linie markierten Nebenmaxima stellen den gemessenen zeitlichen Pulsfolgeabstand der jeweiligen Echofolge dar.

Das Verfahren zur Bestimmung der Schichtdicke $w$ und der Schallgeschwindigkeit $c$ einer Probe 1 basiert auf der Laufzeitmessung von zwei Ultraschallsignalen die unterschiedliche Schallwege $S_1$ und $S_2$ durch die Probe 1 gelaufen sind. Die Schallwege $S_1$ und $S_2$ sind dadurch charakterisiert, dass sie sich in ihrem Winkel zur Probenoberfläche und Länge unterscheiden, hingegen die Schallgeschwindigkeit der Ultraschallwellen auf beiden Schallwegen $S_1$ und $S_2$ gleich ist. Die Schallwege $S_1$ und $S_2$ in der Probe 1 können über verschiedene Messanordnungen realisiert werden. Die Realisierung der Laufzeitmessung von Signalen auf den Schallwegen $S_1$ und $S_2$ durch die Probe 1, sowie die einseitige Kopplung der Messanordnung an die Probe 1 ist den verschiedenen Messanordnungen gemeinsam.

Mit zwei Sende- und Empfangsschallwandler Paaren 3, 6 und 4, 5 welche unterschiedliche Einstrahlwinkel $\alpha_1$, und $\alpha_2$ zum Lot der Probenfläche aufweisen, können die Schallwege $S_1$ und $S_2$ mit einem Winkel $\beta_1$ und $\beta_2$ realisiert werden, siehe Figur 1. Dies stellt aber nicht die einzige Möglichkeit der Realisierung dar. Paare von Sender und Empfänger sind nicht notwendig, das Senden und Empfangen des Ultraschallsignals kann auch mit einem einzelnen Element realisiert werden, wenn das Ultraschallsignal nach dem Durchgang durch die Probe 1 über den Schallweg $S_1$ bzw. $S_2$ an einem Reflektor 7 wieder zurück zum Schallwandler geführt wird, siehe Figur 2. Figur 3 zeigt eine Kombination aus den zuvor dargestellten Messanordnungen: Sender 3 und Empfänger 6 realisieren den Schallweg $S_1$, welcher schräg durch die Probe 1 unter dem Winkel $\beta_1$ verläuft über eine Pitch-Catch-Konfiguration. Schallwandler 8 arbeitet dagegen gleichermaßen als Sender und Empfänger und realisiert den Schallweg $S_2$ welcher senkrecht ($\beta_2$=0) durch die Probe verläuft. Schlussendlich müssen die Schallwandler zur Realisierung der Schallwege $S_1$ bzw. $S_2$ nicht auf einem gemeinsamen Koppelkörper 2 aufgebracht werden. Eine Realisierung der Schallwege $S_1$ bzw. $S_2$ ist auch durch getrennte Koppelkörpereinheiten möglich, siehe Figur 4: Schallweg $S_1$ wird über zwei getrennte Clamp-On-Durchflusssensoren 13 realisiert (Pitch-Catch-Konfiguration) und Schallweg $S_2$ über einen senkrecht zur Probenoberfläche orientierten Schallwandler 14.

Ein Ultraschallsignal welches vom Sendeschallwandler 3, 4 über den Koppelkörper 2 in die Probe 1 transmittiert wird, durchläuft den Schallweg $S_1$ bzw. $S_2$, wenigstens einmal. Beim Austritt des Ultraschallsignals aus der Probe 1 wird das Ultraschallsignal in zwei Anteile aufgespalten: Ein Anteil wird in den Koppelkörper transmittiert und zum Empfangsschallwandler 5 bzw. 6 geleitet, ein anderer Anteil wird zurück in die Probe 1 reflektiert und durchläuft einen zusätzlichen Schallweg $S_1$* bzw. $S_2$* (siehe Figur 1). $S_1$* bzw. $S_2$* sind Schallwege in der Probe 1 die parallelverschoben zu $S_1$ bzw. $S_2$ sind und somit die gleiche Länge und auch den gleichen Winkel zum Lot der Probenoberfläche aufweisen. Die Ultraschallsignale die auf den Schallwegen $S_1$* bzw. $S_2$* die Probe durchlaufen haben, spalten sich wieder an der Grenzschicht zwischen Koppelkörper 2 und Probe 1 in einen transmittierten Anteil (welcher zum Empfangsschallwandler 5 bzw. 6 geleitet wird) und einen reflektierten Anteil welcher wiederrum auf einem zu $S_1$ bzw. $S_2$ parallelverschobenen Weg in der Probe 1 verläuft, auf.

Im Folgenden werden alle Schallwege in der Probe 1, welche die gleiche Länge und den gleichen Winkel zur Probenoberfläche wie $S_1$ bzw. $S_2$ aufweisen, aber innerhalb der Probe aufgrund einer Reflexion an der Grenzschichte von Koppelkörper 2 und Probe 1 parallelverschoben zu dieser sind, auch als Schallweg $S_1$ bzw. $S_2$ bezeichnet.

Durch die zuvor beschriebenen Mehrfachreflexionen innerhalb der Probe 1 bestehen die empfangenden Ultraschallsignale aus der Überlagerung mehrerer Signalanteile die eine unterschiedliche Anzahl der Schallwege $S_1$ bzw. $S_2$ in der Probe gelaufen sind. Die einzelnen Signalanteile weisen daher unterschiedliche Ankunftszeiten am Empfangsschallwandler auf. Die Überlagerung der beschriebenen Signalanteile wird als Echofolge bezeichnet: Der zeitlich erste Signalanteil ist keinmal den Schallweg $S_1$ bzw. $S_2$ gelaufen (wurde an der Probenoberfläche reflektiert und zum Empfänger geleitet), der zweite Signalanteil ist einmal den Schallweg $S_1$ bzw. $S_2$ gelaufen, spätere Signalanteile sind mehrfach Schallwege der Länge von $S_1$ bzw. $S_2$ gelaufen.

Mit jedem Durchlaufen der Probe 1 auf Schallwegen $S_1$ bzw. $S_2$ verzögert sich die Ankunftszeit des jeweiligen Signalanteils am Empfänger um die Laufzeit $\Delta t_1$ bzw. $\Delta t_2$. Am Empfänger 5 bzw. 6 ergibt sich somit ein Ultraschallsignal in Form einer Echofolge. Der zeitliche Abstand der eintreffenden Signalanteile ("Echofolgeabstand") innerhalb des Ultraschallsignals über den Schallweg $S_1$ bzw. $S_2$ beträgt $\Delta t_1$ bzw. $\Delta t_2$. Die Laufzeit $\Delta t_1$ bzw. $\Delta t_2$ ist durch die Schichtdicke $w$ der Probe 1, die Schallgeschwindigkeit $c$ in der Probe 1, die Schallgeschwindigkeit $c_\alpha$ im Koppelkörper 2 und dem Einstrahlwinkel $\alpha_1$ bzw. $\alpha_2$ bestimmt. Die Schallwege $S_1$ bzw. $S_2$ selbst sind über die Schichtdicke $w$ und über das Brechungsgesetzt über den Einstrahlwinkel $\alpha_1$ bzw. $\alpha_2$ bestimmt. Diese Winkel sind aus der Konstruktion der Messanordnung bekannt. Schlussendlich können zwei Gleichungen für die beiden Unbekannten Schichtdicke $w$ und Schallgeschwindigkeit $c$ in Abhängigkeit der Messgrößen Laufzeit $\Delta t_1$ und $\Delta t_2$ aufgestellt werden.

$$c = K_{\alpha_1} K_{\alpha_2} \sqrt{\frac{\Delta t_1^2 - \Delta t_2^2}{K_{\alpha_1} \Delta t_1^2 - K_{\alpha_2}^2 \Delta t_2^2}}$$

$$w = \frac{c\,\Delta t_1}{2}\sqrt{1 - \frac{c^2}{K_{\alpha_1}^2}}$$

$$(1.1)$$

Hierbei wird die abkürzende Schreibweise

$$K_{\alpha_1} = \frac{c_\alpha}{\sin \alpha_1}$$

$$K_{\alpha_2} = \frac{c_\alpha}{\sin \alpha_2}$$

$$(1.2)$$

genutzt, wobei $K_{\alpha 1}$ bzw. $K_{\alpha 2}$ die Sensorkonstanten der Messanordnung mit Winkel $\alpha_1$ bzw. $\alpha_2$ im Koppelkörper 2 sind.

Im Folgenden wird anhand der beispielhaften Messanordnung aus Figur 3 das Verfahren und die Gleichungen zur Bestimmung der Schichtdicke w der Probe 1 und die Schallgeschwindigkeit c in der Probe 1 ohne vorherige Kenntnis der jeweils anderen Größe detaillierter dargestellt. Die Ultraschallsignale werden vom sendenden Schallwandler 3 bzw. 8 über den Koppelkörper 2 und ein geeignetes Koppelmittel teilweise in die Probe 1 transmittiert. Ein Teil des Ultraschalls wird an der Probenoberfläche zum empfangenden Schallwandler 6 bzw. 8 reflektiert. In der Probe 1 wird das Ultraschallsignal an der Rückwand mindestens einmal reflektiert und dann zurück durch den Koppelkörper 2 zum Empfangsschallwandler geleitet. Für die schräge Messanordnung führen die Schallwege 10 und 11 zu zwei zeitlich nacheinander folgenden Ultraschallsignalen am Empfänger 6 und bilden die Echofolge für den Schallweg $S_1$. Aus der Echofolge wird die Laufzeit $\Delta t_1$ aus dem zeitlichen Abstand zwischen zwei Pulsen, bestimmt. In der senkrechten Messanordnung wird das Ultraschallsignal auf Schallweg 9 mehrfach in der Probe 1 reflektiert und durchläuft den Schallweg $S_2$ mehrfach. Das Empfangssignal am Schallwandler 8 stellt somit auch eine Echofolge mit dem zeitlichen Abstand $\Delta t_2$. zwischen zwei Pulsen dar. Der Koppelkörper 2 auf denen beispielhaft Piezoelemente 801, 301 und 601 als Schallwandler 8, 3 und 6 aufgebracht sind, kann aus technischem Kunststoff wie z.B. Polyphenylensulfid, Polyetheretherketon oder Polyphenylsulfon bestehen. Es ist aber auch eine Variante mit einem Stahlkoppelkörper denkbar um erhöhte Arbeitstemperaturen abzudecken. Der Schallwandler 8, bestehend aus einem Piezoelement 801, ist unter dem Winkel 0° zum Lot der Probenoberfläche orientiert, d.h. parallel zur Probenoberfläche (Senkrechtmessung) auf dem Koppelkörper 2 aufgebracht. Die zwei anderen Schallwandler 3 und 6, welche jeweils aus einem oder mehreren Piezoelementen 203 bzw. 601 in einer Ebene bestehen, sind unter einem von Null verschiedenen Winkel zur Probenoberfläche auf dem Koppelkörper 2 aufgebracht, beispielsweise mit einem Winkel von 16° auf einem Kunststoffkoppelkörper zur Anregung von Longitudinalwellen in einer Stahlprobe oder mit einem Winkel von 40° zur Anregung von Transversalwellen in einer Stahlprobe (Schrägmessung).

Damit die Schallgeschwindigkeit in der Probe 1 auf beiden Schallwegen $S_1$ und $S_2$ gleich ist, muss der Winkel der Schräganordnung möglichst unterhalb des ersten kritischen Winkels liegen. Wenn der Winkel der Schrägmessung über dem ersten kritischen Winkel aber unter dem zweiten kritischen Winkel liegt, muss zur Durchführung des Verfahrens ein Transversalwellen-Senkrechtschallwandler zur Senkrechtmessung verwendet werden. Dieser Fall ist für das in Figur 4 dargestellte Ausführungsbeispiel mittels Clamp-on Durchflusssensoren 13 und einer Probe 1 aus Stahl gegeben.

Im Folgenden werden die Formeln für den Spezialfall der Ausführung mit einem senkrechten und einer schrägen Messanordnung offengelegt.

$$c \;=\; K_{\alpha}\sqrt{1-\left(\dfrac{\Delta t_{\beta}}{\Delta t_{\text{Senkrecht}}}\right)^{2}}$$

$$w = \dfrac{c\,\Delta t_{\text{Senkrecht}}}{2} \tag{1.3}$$

Zur Bestimmung der Schallgeschwindigkeit c in der Probe 1 werden mittels der zuvor dargestellten Messanordnungen ("Schrägmessung" und "Senkrechtmessung") die Laufzeiten $\Delta t_1$ und $\Delta t_{\text{Senkrecht}}$ bestimmt. Mit den Gleichungen aus (1.3) kann anhand dieser beiden Messwerte die Schallgeschwindigkeit c und die Schichtdicke w in der Probe 1 bestimmt werden. Die Formel (1.3) ergibt sich als Spezialfall aus (1.1) mit $\alpha_2 = \beta_2 = 0$ und $\Delta t_2 = \Delta t_{\text{Senkrecht}}$.

$\Delta t_{\text{Senkrecht}}$ ist die Laufzeit auf dem Schallweg $S_2$ und entspricht dem Echofolgeabstand zwischen Ultraschallsignalen welche vom Sender 8 senkrecht zur Probenoberfläche n-mal und n+1-mal durch die Probe 1 und zurück zum Empfänger 8 gelaufen sind (mittels n Rückwandreflektionen in der Probe 1). Im Fall der Senkrechtmessung sind Sender und Empfänger der gleiche Schallwandler. Bei der Schrägmessung sind Sender 3 und Empfänger 6 unterschiedliche Schallwandler.

$\Delta t_1$ ist die Laufzeit auf dem Schallweg $S_1$ und entspricht dem Echofolgeabstand zwischen Ultraschallsignalen welche vom Sender 3 unter dem Winkel $\beta_1$ zum Lot der Probenoberfläche n-mal und n+1-mal durch die Probe 1 und zurück zum Empfänger 6 gelaufen sind (mittels n Rückwandreflektion durch die Probe 1). Schallweg 10 und 11 stellen diesen Fall für n=1 dar.

Die Echofolgeabstände werden mit Hilfe der Autokorrelationsfunktion aus den aufgenommenen Echofolgen bestimmt. Figur 6b zeigt die Echofolge einer Senkrechtmessung an einer 4 mm dicken Stahlplatte. Wendet man die Autokorrelationsfunktion auf diese Echofolge an, so stellt sich in der Autokorrelationsfunktion ein erstes relatives Maximum (nachfolgend als erstes Nebenmaximum bezeichnet) neben dem absoluten Maximum bei 0 ein: Für das Beispiel aus Figur 7b (4 mm Stahlplatte) ergibt sich ein Echofolgeabstand der Senkrechtmessung von 1,322 $\mu$s.

Die Echofolge der Schrägmessung im Beispiel aus Figur 6a ist nicht offensichtlich als Pulsfolge erkenntlich. In der Autokorrelationsfunktion dieser Echofolge ist aber trotzdem die Position des ersten Nebenmaximums auswertbar. Falls dieses Nebenmaximum nicht klar ausgezeichnet ist, kann die Bedingung genutzt werden, dass der Echofolgeabstand aus der Schrägmessung kleiner ist als der Echofolgeabstand in der Senkrechtmessung. Mittels dieser Bedingung wird in der Autokorrelationsfunktion der Echofolge der Schrägmessung das korrekte Nebenmaximum ausgewertet. Im aufgeführten Beispiel wird ein Echofolgeabstand der Schrägmessung von 1,049 $\mu$s ermittelt. Diese beiden Messwerte führen eingesetzt in die Berechnungsformeln (1.3) zu einer Schallgeschwindigkeit c von 5996 m/s und einer Schichtdicke w von 3.963 mm.

Zur Bestimmung der einzelnen Schichtdicken w in Mehrschichtsystemen wird jede einzelne Schicht 16 und 17 der Probe 1 mit dem zuvor beschriebenen Verfahren vermessen. Um die Laufzeiten aus den einzelnen Schichten 16 und 17 auswerten zu können, wird die Überlagerung der Echofolgen durch An- und Abschalten einzelner Piezoelemente 301, 601 vermieden. In Figur 5 ist beispielhaft eine Messanordnung zur Vermessung der Schichtdicken $w$ und Schallgeschwindigkeiten c eines Zweischichtsystems gezeigt. Die Schräganordnung besteht aus dem Schallwandlerpaar 15, welche selbst aus einzelnen an- und abschaltbaren Piezoelementen 301 bzw. 601 bestehen. In der Figur 5 sind die aktiven Elemente mit einem Kreuz markiert. Zunächst wird die obere Schicht 16 der Probe 1 vermessen. Signalanteile die mindestens einmal die untere Schicht 17 der Probe 1 durchlaufen werden so weit nach rechts versetzt, dass sie nur die inaktiven Elemente des Empfangswandlers treffen und somit ausgeblendet werden. Die am Empfänger aufgenommene Echofolge enthält somit nur Signalanteile aus dem Koppelkörper 2 und der oberen Schicht 16 der Probe 1. Aus Figur 5 ist auch erkennbar, dass diese Echofolge aus Signalanteilen gebildet wird, welche die Schicht 16 kein-, ein- und zweimal durchlaufen haben. Aus dieser Echofolge wird die Laufzeit $\Delta t_1$ bestimmt.

Die Echofolge aus der Senkrechtmessung mit dem Schallwandler 8 in Figur 5 besteht aus Signalanteilen, die Schallwege in beiden Schichten 16, 17 gelaufen sind. Sie wird in solch einer Art gefenstert, dass nur Signalanteile aus einer Schicht 16 oder 17 zur Auswertung der Laufzeit $\Delta t_{\text{Senkrecht}}$ berücksichtigt werden. Zur Auswertung der Schicht 16 ist das beispielsweise möglich, indem nur die ersten beiden Pulse der Echofolge zur Auswertung herangezogen werden.

Dementsprechend kann mit der Formel (1.3) die Schichtdicke w und die Schallgeschwindigkeit c der oberen Schicht 16 der Probe 1 bestimmt werden.

Um die untere Schicht 17 der Probe 1 zu vermessen werden am Empfänger des Schallwandlerpaares 15 die weiter rechts liegenden Elemente aktiviert (ohne Kreuze dargestellt) und die zuvor aktivierten Elemente (gekreuzt dargestellt) ausgeschaltet. Nun wird eine Echofolge bestehend aus Mehrfachreflexionen in der unteren Schicht 17 aufgenommen (Echofolge besteht aus Signalanteilen die mindestens einmal die Schicht 17 schräg durchlaufen haben) und der zeitliche Pulsfolgeabstand aufgrund von Mehrfachreflexion in Schicht 17 ausgewertet. Dies gelingt nur, wenn entweder weitere Echos aus der oberen Schicht 16 durch die Änderung der Empfangswandlerfläche größtenteils ausgeblendet werden können oder Mehrfachreflexionen in der oberen Schicht 16 stärker als in der unteren Schicht 17 gedämpft werden. Weiterhin kann die zuvor gewonnene Kenntnis der Schichtdicke der oberen Schicht 16 genutzt werden um die zeitliche Lage der Echos aus der oberen Schicht 16 vorherzusagen und somit aus der Auswertung der zeitlichen Pulsfolgeabstände für die untere Schicht 17 zu entfernen.

Die Echofolge aus Senkrechtmessung 8 in Figur 5 wird in solch einer Art gefenstert, dass nur Signalanteile aus der unteren Schicht 17, welche mindestens einmal senkrecht durch die Schicht 17 gelaufen sind, zur Auswertung der Laufzeit $\Delta t_{Senkrecht}$ berücksichtigt werden. So können beispielsweise die ersten beiden Pulse der Echofolge unberücksichtigt bleiben und nur der dritte und weitere, nachfolgende Pulse zur Bestimmung der Laufzeit herangezogen werden.

**Bezugszeichen**

| | |
|---|---|
| 1 | Probe |
| 2 | Koppelkörper |
| 201 | Koppelfläche |
| 202 | Deckfläche des Koppelkörpers 2 |
| 203, 204, 205, 206 | longitudinale Seitenkanten |
| 3 | Schallwandler |
| 301 | Piezoelemente |
| 4 | Schallwandler |
| 5 | Schallwandler |
| 6 | Schallwandler |
| 601 | Piezoelemente |
| 7 | Reflektoren |
| 8 | Schallwandler |
| 801 | Piezoelemente |
| 9 | Schallweg |
| 10 | Schallweg |
| 11 | Schallweg |
| 12 | Schallweg |
| 13 | Schallwandler (Clamp-On-Durchflusssensoren) |
| 131 | Piezoelemente |
| 14 | Schallwandler (Ultraschallwanddickenmesser) |
| 141 | Piezoelemente |
| 15 | Schallwandler |
| 16 | obere Schicht der Probe 1 |
| 17 | untere Schicht der Probe 1 |
| 18 | Schallweg |
| 19 | Schallweg |
| $\alpha_1, \alpha_2$ | Winkel des Schallstrahls zum Lot im Koppelkörper 2 |
| $\beta_1, \beta_2$ | Winkel des Schallstrahls zum Lot im in der Probe 1 |
| $S_1, S_2$ | Schallwege in einer Schicht der Probe |
| $S_1^*, S_2^*$ | Schallwege in einer Schicht der Probe, parallelverschoben zu $S_1, S_2$ |
| $\Delta t_1, \Delta t_2$ | Laufzeiten des Ultraschalls auf Schallweg $S_1, S_2$ |
| $\Delta t_{Senkrecht}$ | Laufzeit auf Schallweg $S_1$ bei der Senkrechtmessung |
| $c$ | Schallgeschwindigkeit in der Probe 1 |
| $c_\alpha$ | Schallgeschwindigkeit im Koppelkörper 2 |
| $w$ | Schichtdicke |

$K_{\alpha 1}$ , $K_{\alpha 2}$    Sensorkonstanten der Messanordnung mit Winkel $\alpha_1$ bzw. $\alpha_2$ im Koppelkörper 2

**Patentansprüche**

1.  Verfahren zur Messung von Schichtdicke (*w*) und Schallgeschwindigkeit (*c*) einer Schicht in einer ein- oder mehrlagigen Probe (1) mittels Ultraschall durch Messung von Laufzeiten ($\Delta t_1$, $\Delta t_2$) an Ultraschallsignalen, welche auf wenigstens zwei verschiedenen Schallwegen ($S_1$ , $S_2$) durch die Probe (1) laufen, wobei die Schallwege ($S_1$ , $S_2$) unter verschiedenen Winkeln ($\beta_1$, $\beta_2$) mit der gleichen Schallgeschwindigkeit (*c*) in derselben Schicht verlaufen, wobei die Schallwege ( $S_1$, $S_2$) erzeugt werden, indem auf der Oberfläche der ein- oder mehrlagigen Probe (1) mindestens ein Koppelkörper (2) angeordnet ist mit wenigstens zwei Schallwandlern (3, 4, 5, 6, 8, 13, 14, 15), welche die Ultraschallsignale auf den zwei verschiedenen Schallwegen durch den Koppelkörper (2) in die Probe (1) aussenden und wieder empfangen und die empfangenden Ultraschallsignale aus einer Überlagerung mehrerer Signalanteile, die eine unterschiedliche Anzahl der Schallwege ($S_1$, $S_2$) in der Probe gelaufen sind, bestehen, und die Überlagerung der einzelnen Signalanteile eine Echofolge darstellen,
    **dadurch gekennzeichnet, dass**
    die Laufzeiten ($\Delta t_1$, $\Delta t_2$) die gegenseitigen zeitlichen Abstände aufeinanderfolgender Echos sind, wobei eine Berechnung der Schichtdicke (*w*) und Schallgeschwindigkeit (*c*) in der Schicht mittels Gleichungen

$$c = K_{\alpha_1} K_{\alpha_2} \sqrt{\frac{\Delta t_1^2 - \Delta t_2^2}{K_{\alpha_1} \Delta t_1^2 - K_{\alpha_2}^2 \Delta t_2^2}}$$

$$w = \frac{c\, \Delta t_1}{2} \sqrt{1 - \frac{c^2}{K_{\alpha_1}^2}}$$

erfolgt, mit

*c* - Schallgeschwindigkeit in einer Schicht der Probe (1),
*w* - Schichtdicke einer Schicht der Probe (1),
$\Delta t_1$ - zeitlicher Abstand der Echos innerhalb des Ultraschallsignals über den Schallweg ($S_1$),
$\Delta t_2$ - zeitlicher Abstand der Echos innerhalb des Ultraschallsignals über den Schallweg ($S_2$),
$K_{\alpha 1}$ , $K_{\alpha 2}$ - Sensorkonstanten der Schallwandler (3, 4, 5, 6, 8, 13, 14, 15),

wobei die Sensorkonstanten ($K_{\alpha i}$) definiert sind über

$$K_{\alpha_i} = \frac{c_\alpha}{\sin \alpha_i}$$

mit *i* = {1,2} und
$c_\alpha$ Schallgeschwindigkeit im Koppelkörper (2),
$\alpha_i$ Winkel des Schallstrahls zum Lot im Koppelkörper (2).

2.  Verfahren nach Anspruch 1 **dadurch gekennzeichnet, dass** die Laufzeit ($\Delta t_1$) als Position eines ersten Nebenmaximums einer Autokorrelationsfunktion einer Echofolge bestimmt wird, wobei die Echofolge aus Ultraschallsignalen besteht, welche vom Schallwandler (3) unter dem Winkel ($\beta_1$) zum Lot der Probenoberfläche wenigstens n-mal und n+1-mal durch die zu vermessende Schicht der Probe (1) und zurück zum Schallwandler (3) oder Schallwandler (5) mittels n Rückwandreflektion durch die Probe (1) gelaufen sind, und dass die Laufzeit ($\Delta t_2$) als Position eines ersten Nebenmaximums einer Autokorrelationsfunktion einer Echofolge bestimmt wird, wobei die Echofolge aus Ultraschallsignalen besteht, welche vom Schallwandler (8) oder Schallwandler (4) unter dem Winkel ($\beta_2$) zum Lot der Probenoberfläche wenigstens n-mal und n+1-mal durch die zu vermessende Schicht der Probe (1) und zurück zum Schallwandler (8), Schallwandler (4) oder Schallwandler (5) mittels n Rückwandreflektion durch die Probe (1) gelaufen sind.

3. Verfahren nach Anspruch 1 **dadurch gekennzeichnet, dass** durch Zu- und Abschalten einzelner Piezoelemente (301, 601, 801; 131, 141) einer aktiven Schallwandlerfläche der Schallwandler (3, 4, 5, 6, 8, 13, 14, 15), welche mehrere Piezoelemente (301, 601, 801; 131, 141) enthalten, Signalanteile, welche die Probe (1) auf den Schallwegen ($S_1$, $S_2$) durchlaufen und am Schallwandler (3, 4, 5, 6, 8, 13, 14, 15) auftreffen, ausgewählt werden.

4. Verfahren nach Anspruch 3 **dadurch gekennzeichnet, dass** für eine wenigstens zweilagige Probe (1) durch Zu- und Abschalten einzelner Piezoelemente (301, 601, 801; 131, 141) einer aktiven Schallwandlerfläche der Schallwandler (3, 4, 5, 6, 8, 13, 14, 15), für jede einzelne Schicht die Schichtdicke ($w$) und die Schallgeschwindigkeit ($c$) bestimmt werden.

**Claims**

1. Method for measuring layer thickness (w) and speed of sound (c) for a layer in a single- or multilayer sample (1) by means of ultrasound by measuring transit times ($\Delta t_1$, $\Delta t_2$) for ultrasonic signals that travel through the sample (1) on at least two different acoustic paths ($S_1$, $S_2$), wherein the acoustic paths ($S_1$, $S_2$) extend in the same layer at different angles ($\beta_1$, $\beta_2$) at the same speed of sound ($c$), wherein the acoustic paths ($S_1$, $S_2$) are produced as a result of at least one coupling body (2) being arranged on the surface of the single- or multilayer sample (1), with at least two sound transducers (3, 4, 5, 6, 8, 13, 14, 15), which transmit the ultrasonic signals into the sample (1), and receive them again, on the two different acoustic paths by way of the coupling body (2), and the received ultrasonic signals consist of a superimposition of multiple signal components that have travelled along a different number of the acoustic paths ($S_1$, $S_2$) in the sample, and the superimposition of the individual signal components represents an echo sequence,
**characterized in that**
the transit times ($\Delta t_1$, $\Delta t_2$) are the mutual intervals of time between successive echoes, the layer thickness ($w$) and speed of sound (c) in the layer being calculated by means of equations

$$c = K_{\alpha_1} K_{\alpha_2} \sqrt{\frac{\Delta t_1^2 - \Delta t_2^2}{K_{\alpha_1} \Delta t_1^2 - K_{\alpha_2}^2 \Delta t_2^2}}$$

$$w = \frac{c\,\Delta t_1}{2} \sqrt{1 - \frac{c^2}{K_{\alpha_1}^2}}$$

with

$c$ - speed of sound in a layer of the sample (1),
$w$ - layer thickness of a layer of the sample (1),
$\Delta t_1$ - interval of time between the echoes within the ultrasonic signal over the acoustic path ($S_1$),
$\Delta t_2$ - interval of time between the echoes within the ultrasonic signal over the acoustic path ($S_2$),
$K_{\alpha_1}$, $K_{\alpha 2}$ - sensor constants of the sound transducers (3, 4, 5, 6, 8, 13, 14, 15),

wherein the sensor constants ($K_{\alpha_i}$) are defined by

$$K_{\alpha_i} = \frac{c_\alpha}{sin\alpha_i}$$

with i={1,2} and
$c_\alpha$ - speed of sound in the coupling body (2),
$\alpha_i$ - angle of the acoustic beam to the perpendicular in the coupling body (2).

**2.** Method according to Claim 1, **characterized in that** the transit time ($\Delta t_1$) is determined as the position of a first secondary maximum of an autocorrelation function of an echo sequence, the echo sequence consisting of ultrasonic signals that have travelled from the sound transducer (3) through the layer to be measured of the sample (1) and back to the sound transducer (3) or sound transducer (5) at the angle ($\beta_1$) to the perpendicular of the sample surface at least n times and n+1 times by means of n back-wall reflection through the sample (1), and **in that** the transit time ($\Delta t_2$) is determined as the position of a first secondary maximum of an autocorrelation function of an echo sequence, the echo sequence consisting of ultrasonic signals that have travelled from the sound transducer (8) or sound transducer (4) through the layer to be measured of the sample (1) and back to the sound transducer (8), sound transducer (4) or sound transducer (5) at the angle ($\beta_2$) to the perpendicular of the sample surface at least n times and n+1 times by means of n back-wall reflection through the sample (1).

**3.** Method according to Claim 1, **characterized in that** signal components that pass through the sample (1) on the acoustic paths ($S_1$, $S_2$) and impinge on the sound transducer (3, 4, 5, 6, 8, 13, 14, 15) are selected by connecting and disconnecting individual piezoelectric elements (301, 601, 801; 131, 141) of an active sound transducer surface of the sound transducers (3, 4, 5, 6, 8, 13, 14, 15), which contain multiple piezoelectric elements (301, 601, 801; 131, 141).

**4.** Method according to Claim 3, **characterized in that** the layer thickness (w) and the speed of sound (c) are determined for each individual layer for an at least two-layer sample (1) by connecting and disconnecting individual piezoelectric elements (301, 601, 801; 131, 141) of an active sound transducer surface of the sound transducers (3, 4, 5, 6, 8, 13, 14, 15).

## Revendications

**1.** Procédé de mesure de l'épaisseur de couche (w) et de la vitesse acoustique (c) dans une couche d'un échantillon monocouche ou multicouche (1) au moyen d'ultrasons par mesure de temps de propagation ($\Delta t_1$, $\Delta t_2$) sur des signaux ultrasonores qui parcourent au moins deux trajets acoustiques ($S_1$, $S_2$) différents à travers l'échantillon (1), les trajets acoustiques ($S_1$, $S_2$) s'étendant avec des angles ($\beta_1$, $\beta_2$) différents et à la même vitesse acoustique (c) dans la même couche, les trajets acoustiques ($S_1$, $S_2$) étant générés par mise en place d'au moins un corps de couplage (2) muni d'au moins deux transducteurs acoustiques (3, 4, 5, 6, 8, 13, 14, 15) sur la surface de l'échantillon monocouche ou multicouche (1), lesquels transducteurs acoustiques émettent et reçoivent à nouveau les signaux ultrasonores sur les deux trajets acoustiques différents à travers le corps de couplage (2) dans l'échantillon (1) et les signaux ultrasonores reçus comprenant une superposition de plusieurs composantes de signal qui parcourent un nombre différent de trajets acoustiques ($S_1$, $S_2$) dans l'échantillon et la superposition des composantes de signal individuelles représentant une séquence d'échos,

**caractérisé en ce que**

les temps de propagation ($\Delta t_1$, $\Delta t_2$) sont les espacements temporels d'échos successifs entre eux, un calcul de l'épaisseur de couche (w) et de la vitesse acoustique (c) dans la couche étant effectué à l'aide des équations

$$c = K_{\alpha_1} K_{\alpha_2} \sqrt{\frac{\Delta t_1^2 - \Delta t_2^2}{K_{\alpha_1} \Delta t_1^2 - K_{\alpha_2}^2 \Delta t_2^2}}$$

$$w = \frac{c \, \Delta t_1}{2} \sqrt{1 - \frac{c^2}{K_{\alpha_1}^2}}$$

dans lesquelles

c est la vitesse acoustique dans une couche de l'échantillon (1)
w est l'épaisseur d'une couche de l'échantillon (1),
$\Delta t_1$ est l'espacement temporel des échos à l'intérieur du signal ultrasonore sur le trajet acoustique ($S_1$),
$\Delta t_2$ est l'espacement temporel des échos à l'intérieur du signal ultrasonore sur le trajet acoustique ($S_2$),

$K_{\alpha 1}$, $K_{\alpha 2}$ sont des constantes de capteur des transducteurs acoustiques (3, 4, 5, 6, 8, 13, 14, 15),

les constantes de capteur ($K_{\alpha 1}$,) étant définies par

$$K_{\alpha_i} = \frac{c_\alpha}{sin\,\alpha_i}$$

où

i={1,2} et
$c_\alpha$ est la vitesse acoustique dans le corps de couplage (2),
$\alpha_i$ est l'angle du faisceau acoustique par rapport à la perpendiculaire dans le corps de couplage (2).

2. Procédé selon la revendication 1, **caractérisé en ce que** le temps de propagation ($\Delta t_1$) est déterminé comme la position d'un premier maximum secondaire d'une fonction d'autocorrélation d'une séquence d'échos, la séquence d'échos comprenant des signaux ultrasonores qui se propagent au moins n fois et n+1 fois à travers la couche à mesurer de l'échantillon (1) depuis le transducteur acoustique (3) avec l'angle ($\beta_1$) par rapport à la perpendiculaire à la surface de l'échantillon et de retour vers le transducteur acoustique (3) ou le transducteur acoustique (5) au moyen de n réflexions de la paroi arrière à travers l'échantillon (1) et **en ce que** le temps de propagation ($\Delta t_2$) est déterminé comme position d'un premier maximum secondaire d'une fonction d'autocorrélation d'une séquence d'échos, la séquence d'échos comprenant des signaux ultrasonores qui se propagent au moins n fois et n+1 fois à travers la couche de l'échantillon (1) à mesurer, depuis le transducteur acoustique (8) ou le transducteur acoustique (4) avec l'angle ($\beta_2$) par rapport à la perpendiculaire à la surface de l'échantillon et de retour vers le transducteur acoustique (8), transducteur acoustique (4) ou transducteur acoustique (5) à travers l'échantillon (1) au moyen de n réflexions de paroi arrière.

3. Procédé selon la revendication 1, **caractérisé en ce que** des composantes de signal qui parcourent l'échantillon (1) sur les trajets acoustiques ($S_1$, $S_2$) et qui sont incidentes au transducteur acoustique (3, 4, 5, 6, 8, 13, 14, 15), peuvent être sélectionnées par activation et désactivation d'éléments piézo individuels (301, 601, 801 ; 131, 141) d'une surface active des transducteurs acoustiques (3, 4, 5, 6, 8, 13, 14, 15) qui contiennent plusieurs éléments piézo (301, 601, 801 ; 131, 141).

4. Procédé selon la revendication 3, **caractérisé en ce que**, pour un échantillon (1) comprenant au moins deux couches, l'épaisseur de couche (w) et la vitesse acoustique (c) sont déterminées pour chaque couche individuelle par activation et désactivation des éléments piézo individuels (301, 601, 801 ; 131, 141) d'une surface active des transducteurs acoustiques (3, 4, 5, 6, 8, 13, 14, 15).

Figur 1

Figur 2

Figur 3

Figur 4

Figur 5

Figur 6a

Figur 6b

Figur 7a

Figur 7b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6883376 B2
- US 2006191342 A1
- US 4398421 A
- US 6070466 A
- US 5349860 A
- US 6035717 A
- DE 102010037981 A1
- DE 3441894 A1
- US 2004250624 A1
- US 2014020478 A1